# EUROPEAN PATENT APPLICATION

(11) **EP 1 225 735 A1**
(43) Date of publication of application: **24.07.2002**
(21) Application number: 01947838.7
(22) Date of filing: 05.07.2001
(51) Int. Cl.: H04L 12/56, H04L 29/08, H04L 1/16

(54) **DATA COMMUNICATION SYSTEM**

(30) Priority: 07.07.2000 JP 2000207296; 29.06.2001 JP 2001199621
(71) Applicant: MATSUSHITA ELECTRIC INDUSTRIAL CO., LTD., Kadoma-shi, Osaka 571-8501 (JP)
(72) Inventor: IDO, Daiji, Yokohama-shi, Kanagawa 236-0005 (JP); IMURA, Koji, Machida-shi, Tokyo 194-0013 (JP); MIYAZAKI, Akihiro, Sakai-shi, Osaka 591-8032 (JP); HATA, Koichi, Katano-shi, Osaka 576-0021 (JP)
(74) Representative: Grünecker, Kinkeldey, Stockmair & Schwanhäusser Anwaltssozietät
(86) International application number: JP0105831
(87) International publication number: WO0205496

(57) **Abstract**

A data communication system capable of eliminating the retransmission of useless data that is too late for the playback time at the receiving side, and, accordingly, capable of eliminating the wasteful utilization of transmission band. In the system, round-trip time RTT of a packet between the server (data transmitting apparatus) 100 and the terminal apparatus (data receiving apparatus) 200 is calculated, and only when the sum of the round-trip time RTT and present time is less than the playback time of the packet, retransmission request for lost packet which has high priority is made.

## Description

### Technical Field

The present invention relates to a data communication system, and to a data transmitting apparatus and a data receiving apparatus constituting the data communication system.

### Background Art

Conventionally, when digital data (multimedia data) such as video or audio is transmitted via packet communication channel, as a transport-layer protocol, communication is carried out using TCP (Transmission Control Protocol) protocol which provides high reliability but does not take playback time of video or audio into consideration, or UDP (User Datagram Protocol) protocol which is suitable to real time communication but has a possibility that lost data may occur.

In a multimedia data communication utilizing TCP, such a processing is required in which data is played back after all of the data have been received by providing a memory for the receiving side. While in the case of utilizing UDP, since important data may be lost during the data playback, the quality of video or audio may be deteriorated.

Therefore, according to the Japanese Patent No. 2000-151680 A, when a data transmitted utilizing the UDP protocol is lost, a reliable transmission is realized by retransmission of the lost data utilizing the TCP protocol with high reliability.

The method of data transmission according to the Japanese Patent No. 2000-151680 A is described below. First of all, a receiving side receives a packet from a transmitting side and disassembles the packet, or detects that a packet has failed to be received. Sequence numbers are given to the packets, and these numbers are checked whenever receiving packets, and at a time when discontinuity of sequence numbers is detected, existence of packets which have failed to be received can be detected, or the number of packets which have failed to be received can be counted. Then, by transmitting loss information of the lost data indicating that the packet has failed to be received to the transmitting side, a retransmission request for the packet is made to the transmitting side. The transmitting side retransmits the packet requested to retransmit utilizing the TCP protocol with high reliability. Further, the receiving side is provided with a TCP packet disassembling section and a UDP packet disassembling section, and it is adapted so that any of the TCP packet and the UDP packet is disassembled and transferred to an RTP (Real-time Transfer Protocol) packet disassembling section.

However, in the conventional art, there is a problem that sometimes wasteful or useless data may be retransmitted during the transmission of a video or audio data, since the transmitting side carries out the retransmission even when it is too late for the playback time, so that a wasteful transmission band is uselessly utilized as equal amount as that for transmission of the wasteful data. Due to the fact that the transmission band is used wastefully, then it becomes difficult to increase the capacity of the entire system since excess electric power for transmitting the wasteful data is required.

### Disclosure of the Invention

It is an object of the present invention to provide a data communication system capable of eliminating the retransmission of useless data that is too late for the playback time at the receiving side, and, accordingly, capable of eliminating the wasteful utilization of transmission band.

According to an aspect of the present invention, a data communication system comprises a data transmitting apparatus and a data receiving apparatus, wherein the data transmitting apparatus comprises storing means for storing a retransmittable data only, retransmitting means for retransmitting a data that is extracted from the data stored in the storing means corresponding to a retransmission request of the data receiving apparatus, calculating means for calculating a data round-trip time between the data receiving apparatus and the data transmitting apparatus, and transmitting means for transmitting the data round-trip time calculated by the calculating means to the data receiving apparatus at a predetermined time interval, and wherein the data receiving apparatus comprises receiving means for receiving the data transmitted from the data transmitting apparatus, loss detecting means for detecting loss of data when the data is received by the receiving means, playback time calculating means for calculating playback time of the data received by the receiving means, round-trip time receiving means for receiving the data round-trip time transmitted from the transmitting means, and retransmission request deciding means for deciding, when a lost data is detected by the loss detecting means, whether a retransmission request for the lost data is made or not based on the playback time calculated by the playback time calculating means and the data round-trip time received by the round-trip time receiving means.

According to another aspect of the present invention, a data communication system comprising a data transmitting apparatus and a data receiving apparatus, wherein the data transmitting apparatus comprises storing means for storing a retransmittable data only, retransmitting means for retransmitting a data that is extracted from the data stored in the storing means corresponding to a retransmission request of the data receiving apparatus, measuring means for measuring a differential time between reception time of a first data transmitted from the data receiving apparatus and transmission time of a second data to be transmitted to the data receiving apparatus in response to the first data, and transmitting means for transmitting the differential time measured by the measuring means included in the second data to the data receiving apparatus at a predetermined time interval, and wherein the data receiving apparatus comprises calculating means for calculating a data round-trip time between the data transmitting apparatus and the data receiving apparatus by subtracting transmission time of the first data transmitted to the data transmitting apparatus and the differential time included in the second data transmitted from the data transmitting apparatus from reception time of the second data, receiving means for receiving the data transmitted from the data transmitting apparatus, loss detecting means for detecting loss of data when the data is received by the receiving means, playback time calculating means for calculating playback time of the data received by the receiving means, and retransmission request deciding means for deciding, when a lost data is detected by the loss detecting means, whether a retransmission request for the lost data is made or not based on the playback time calculated by the playback time calculating means and the data round-trip time calculated by the calculating means.

### Brief Description of the Drawings

FIG. 1 is a block diagram showing a constitution of a data transmitting apparatus for a data communication system according to a first embodiment of the invention;
FIG. 2 is a block diagram showing a constitution of a data receiving apparatus for the data communication system according to the first embodiment of the invention;
FIG. 3 is a flowchart illustrating the contents of a round-trip time RTT transmitting processing in a server corresponding to the first embodiment;
FIG. 4 is a block diagram illustrating a constitution of a round-trip time calculating section of the server corresponding to the first embodiment;
FIG. 5 is a sequence diagram illustrating a calculating method of the round-trip time RTT in the server corresponding to the first embodiment;
FIG. 6 is a schematic illustration showing an example of a packet in which the round-trip time RTT is recorded and which is transmitted from the server corresponding to the first embodiment to a terminal apparatus;
FIG. 7 is a schematic illustration showing another example of a packet in which the round-trip time RTT is recorded and which is transmitted from the server corresponding to the first embodiment to the terminal apparatus;
FIG. 8 is a schematic illustration showing an example of a packet in which a differential time DLSR is recorded and which is transmitted from the terminal to the server apparatus corresponding to the first embodiment of the invention;
FIG. 9 is a flowchart illustrating the contents of a differential time DLSR transmitting processing in the terminal apparatus corresponding to the first embodiment;
FIG. 10 is a flowchart illustrating the contents of a packet retransmission request deciding processing in the terminal apparatus corresponding to the first embodiment;
FIG. 11 is an illustration provided for the explanation of FIG. 10 and showing values of various parameters given to the respective packets that are transmitted from the server corresponding to the first embodiment to the terminal apparatus;
FIG. 12 is a block diagram showing another constitution of the server corresponding to the first embodiment;
FIG. 13 is a block diagram showing another constitution of the terminal apparatus corresponding to the first embodiment;
FIG. 14 is a block diagram showing a constitution of a data transmitting apparatus for a data communication system according to a second embodiment of the invention;
FIG. 15 is a block diagram showing a constitution of a data receiving apparatus for the data communication system according to the second embodiment of the invention;
FIG. 16 is a sequence diagram illustrating a calculating method of the round-trip time RTT in a terminal apparatus corresponding to the second embodiment.

### Best Mode for Carrying Out the Invention

Now, referring to the attached figures, embodiments of the invention will be described in detail.

### (First Embodiment)

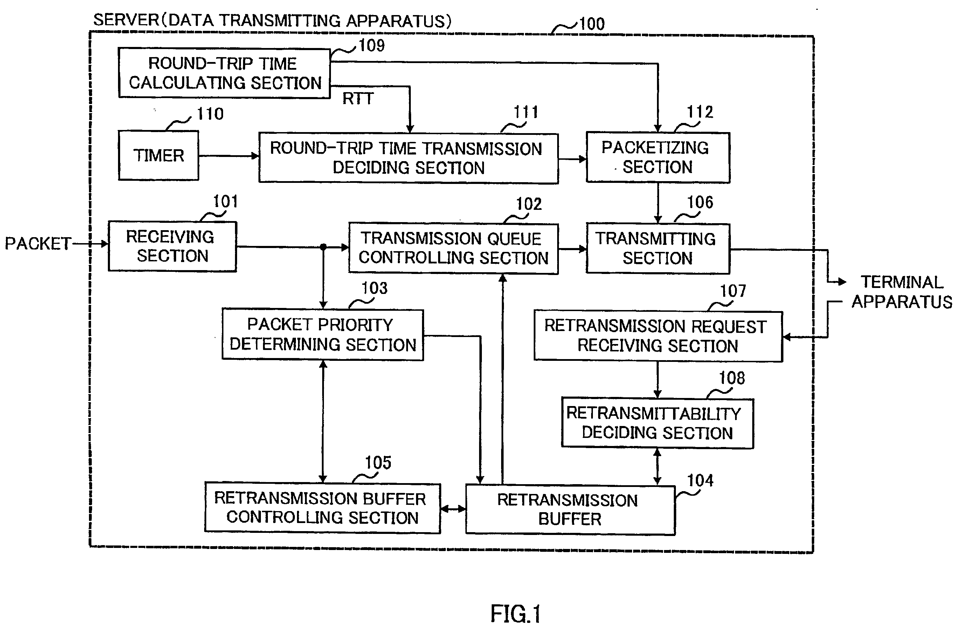

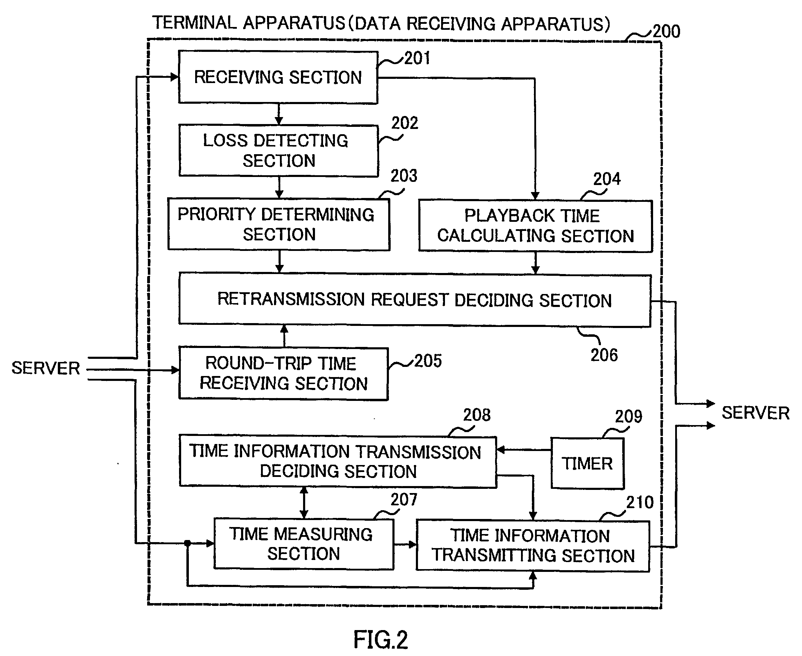

FIG. 1 is a block diagram showing a constitution of a data transmitting apparatus for a data communication system according to the first embodiment of the invention, FIG. 2 is a block diagram showing a constitution of a data receiving apparatus for the same data communication system.

A data transmitting apparatus 100 shown in FIG. 1 has a function of transmitting a packet via a packet communication channel, which is not shown in the figures, to a data receiving apparatus 200 shown in FIG. 2 as well as receiving controlling data from the data receiving apparatus 200. For example, the data transmitting apparatus 100 is used in a server for data communication being connected to a packet communication channel as a single unit or being mounted in an exchange station apparatus, or a server mounted in a base station apparatus in a mobile communication system.

Also, the data receiving apparatus 200 is used, for examples, for an information communication terminal apparatus such as a personal computer, etc., that carries out data transmission/receptionvia a cable channel, and for a mobile station apparatus, etc., in a mobile communication system (for instance, a mobile telephone and a mobile type information communication terminal apparatus which has a mobile telephone function and a computer function).

Further, hereinafter, a description is introduced while taking a server and an information communication terminal apparatus at a client side (hereinafter, simply referred to as "terminal apparatus") as an example for a data transmitting apparatus and a data receiving apparatus, respectively.

The server 100 comprises, as shown in FIG. 1, a receiving section 101, a transmission queue controlling section 102, a packet priority determining section 103, a retransmission buffer 104, a retransmission buffer controlling section 105, a transmitting section 106, a retransmission request receiving section 107, a retransmitability deciding section 108, a round-trip time calculating section 109, a timer 110, a round-trip time transmission deciding section 111 and a packetizing section 112.

Moreover, the terminal apparatus 200 includes, as shown in FIG. 2, a receiving section 201, a loss detecting section 202, a priority determining section 203, a playback time calculating section 204, a round-trip time receiving section 205, a retransmission request deciding section 206, a time measuring section 207, a time information transmission deciding section 208, a timer 209 and a time information transmitting section 210.

Then, an operational description will be made to the data communication system having the aforementioned constitution.

First, the server 100 receives by means of the receiving section 101 packets from own application function such as video/audio coding or the like and own storage function of video/audio data, and outputs the received packets to both transmission queue controlling section 102 and packet priority determining section 103.

Then, the received packets are subjected to a determining process concerning the priority thereof, and the packets of which priority is determined as high in the packet priority determining section 103 are stored in the retransmission buffer 104. When storing the packets, the retransmission buffer controlling section 105 identifies the packets individually based on the sequence number (serial number) which are given thereto, and controls what addressed memory locations of the retransmission buffer 104 in which the respective packets are stored. The priority of the packets is given to the respective packets by means of the application function.

On the other hand, when the server 100 receives a packet retransmission request sent from the terminal apparatus 200 by means of the retransmission request receiving section 107, the server 100 makes a YES/NO decision in the retansmitability section 108 concerning the retransmission of the packet corresponding to the retransmission request which are stored in the retransmission buffer 104. Moreover, responding to the decision result, when it is possible to retransmit the packet which is requested to retransmit, the packet requested to retransmit is read out from the retransmission buffer 104 and outputted to the transmission queue controlling section 102.

The transmission queue controlling section 102 controls the transmission time of the packet received from the receiving section 101 or from the retransmission buffer 104. The packet controlled by the transmission queue controlling section 102 is transmitted to the terminal apparatus 200 together with the packet from the packetizing section 112 via the transmitting section 106.

At this time, the server 100 makes a decision, in the round-trip time transmission deciding section 111, whether to transmit the information of the round-trip time RTT (round-trip time of the packet between the server 100 and the terminal apparatus 200) which is calculated in the round-trip time calculating section 109. The contents of the decision process will be described later in detail. Then, when it is decided in the round-trip time transmission deciding section 111 that the round-trip time RTT should be transmitted, the round-trip time RTT which is decided to be transmitted is packetized in the foregoing packetizing section 112 and outputted to the transmitting section 106. The contents of the packetizing process of the round-trip time RTT will be described later in detail.

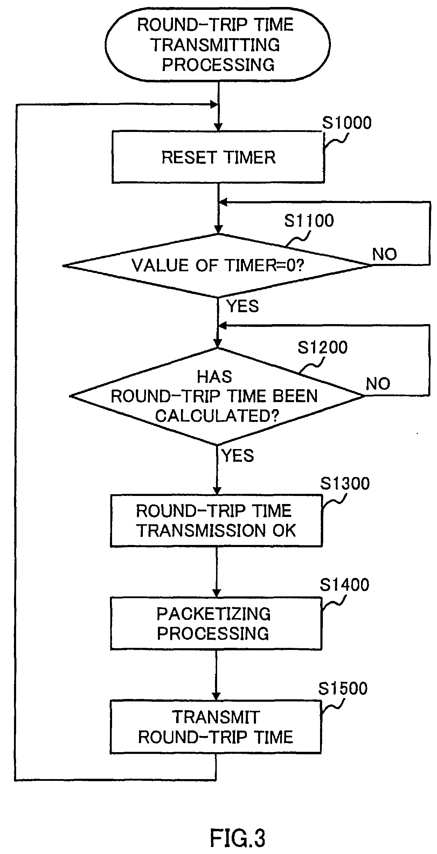

Next, referring to the flowchart shown in FIG. 3, a description will be made to the transmitting operation of the round-trip time RTT in the server 100. Further, the transmitting operation of the round-trip time RTT is carried out by the round-trip time calculating section 109, the timer 110, the round-trip time transmission deciding section 111 and the packetizing section 112, which are the essential elements of the invention.

First of all, in step S1000, the timer 110 is reset and the value of the timer is set to a predetermined initial value (a positive integral number). In the timer 110, when a specific time corresponding to the initial value has passed, the value (value of the timer) becomes "0", and the transmission time of the round-trip time RTT is outputted to the round-trip time transmission deciding section 111 at regular intervals. Precisely, for example, "0" is outputted.

In step S1100, a decision whether the value of the timer 110 (value of the timer) is "0" is made in the round-trip time transmission deciding section 111. As a result of the decision, when the value of the timer is not "0" (S1100:NO), the relevant decision is continued, i.e., the operation waits, and when the value of the timer is "0" (S1100:YES), the operation proceeds to step S1200.

In step S1200, in the round-trip time transmission deciding section 111, a decision whether the round-trip time RTT (round-trip time of the packet between the server 100 and the terminal apparatus 200) has newly calculated in the round-trip time calculating section 109 is made. As a result of the decision, when the value of the round-trip time RTT has not been newly calculated, that is to say, when the value of the round-trip time RTT has not been renewed (updated) (S1200:NO), the relevant decision is continued, i.e., the operation waits, and when the value of the round-trip time RTT has been newly calculated, that is to say, when the round-trip time RTT has been renewed (updated)(S1200:YES), the operation proceeds to step S1300. Further, the contents of the calculation process of the round-trip time RTT in the round-trip time calculating section 109 will be described later in detail.

In step S1300, a decision that the transmission of the round-trip time RTT is OK, i.e., the round-trip time RTT should be transmitted is made in the round-trip time transmission deciding section 111.

Next, in step S1400, the renewed (updated) round-trip time RTT is packetized in the packetizing section 112. The contents of the packetizing process will be described later in detail.

Finally, in step S1500, the packet in which the round-trip time RTT is recorded by packetizing is transmitted to the terminal apparatus 200 via the transmitting section 106, and then the operation returns to step S1000.

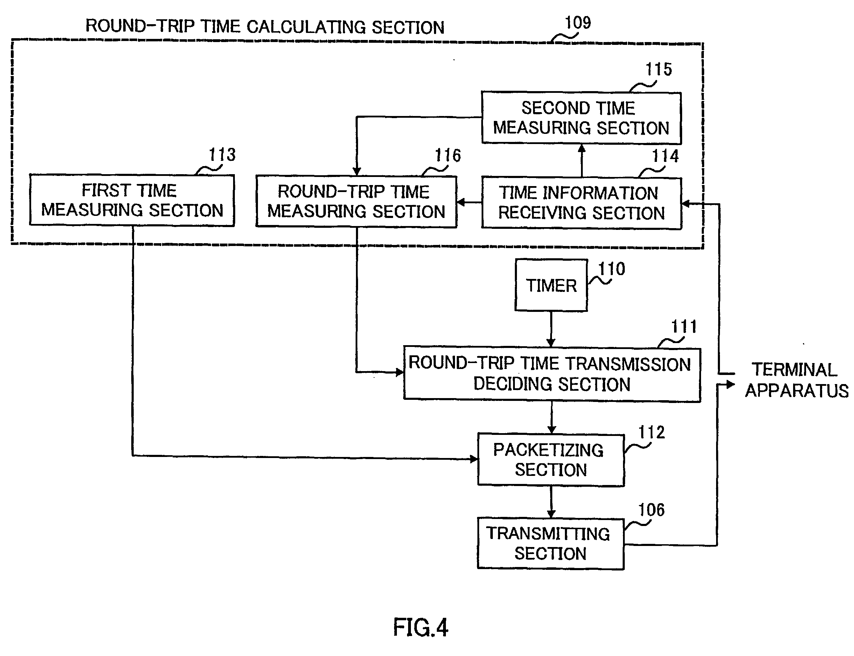

Now, referring to FIG. 4 to FIG. 8, a description will be made to the contents of the round-trip time RTT calculating process which is subjected to the decision in step S1200, and to the contents of the packetizing process in step S1400.

FIG. 4 is a block diagram illustrating a constitution of the round-trip time calculating section 109 of the server 100 (data transmitting apparatus).

The round-trip time calculating section 109 comprises, as shown in FIG. 4, a first time measuring section 113, a time information receiving section 114, a second time measuring section 115 and a round-trip time calculating section 116.

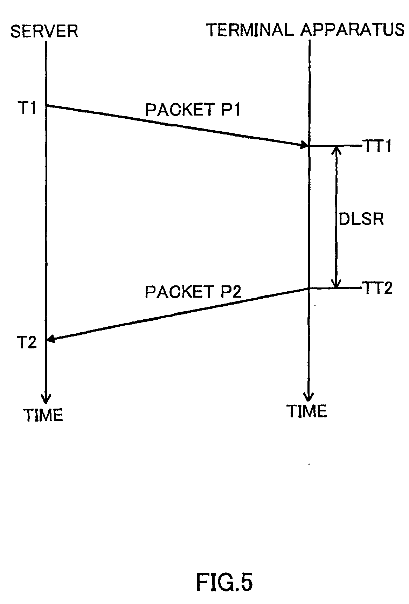

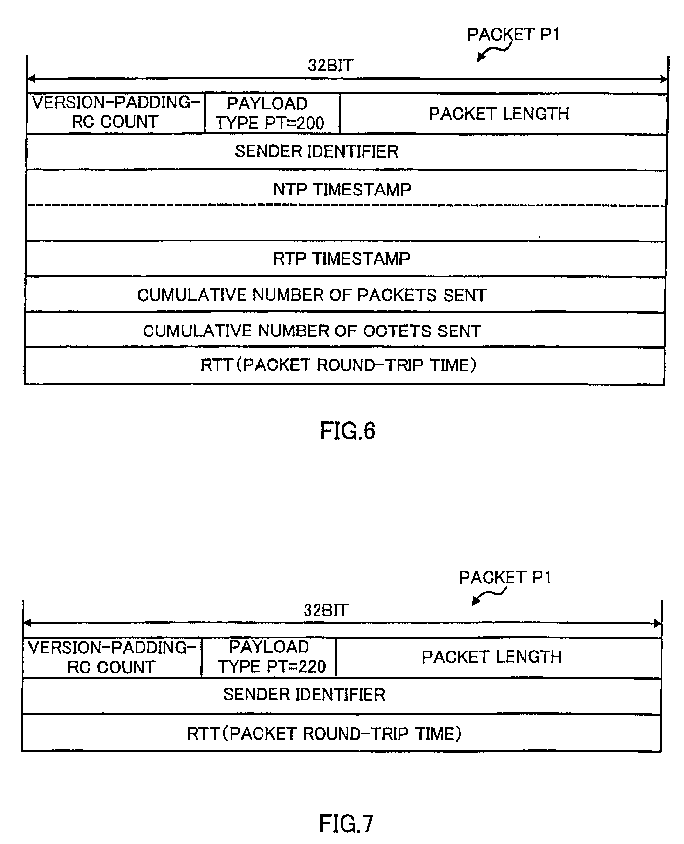

The first time measuring section 113 measures the time (server transmission time) T1 when the sender report packet P1 is transmitted from the transmitting section 106 of the server 100 (refer to FIG. 5). The measured server transmission time T1 is packetized together with the round-trip time RTT in the packetizing section 112. That is to say, in the packet P1 that is obtained as a result of packetizing process, the server transmission time T1 is recorded. FIG. 6 shows an example of the packet P1.

The packet P1 shown in FIG. 6 includes information of version-padding-RC count, payload type, packet length, sender identifier, NTP timestamp, RTP timestamp, cumulative number of packets sent, cumulative number of octets sent and RTT (packet round-trip time).

Herein, as an identifier of the payload (information section) type, an identifier indicating a transmitting report packet (PT=200) which is an indication of a time information periodically transmitted from the server 100 rather than an ordinary data is given to the payload type (PT). In the packet length, a packet length measured in 32-bit unit is recorded. In the sender identifier, a sequence of numbers capable of uniquely identifying the sender is recorded. In the NTP timestamp and the RTP timestamp, transmission time of the packet is recorded. In the cumulative number of packets sent, the total number of packets transmitted after the session has begun is recorded. In the cumulative number of octets sent, the total number of octets transmitted after the session has begun is recorded. In the RTT, packet round-trip time calculated in the round-trip time calculating section 109 is recorded.

Further, the manner of packetizing is not limited to the example shown in FIG. 6. For instance, as shown in FIG. 7, another manner in which an identifier indicating a packet including round-trip time (PT=220) given to the payload type to transmit the round-trip time RTT to the terminal apparatus 200 may be used. In this case, since the packet P1 has only the information of version-padding-RC count, payload type, packet length, sender identifier and RTT packet (round-trip time), the round-trip time can be transmitted to the receiving side as a packet having a fewer amount of information compared to the case shown in FIG. 6. Furthermore, the information may be packetized in another manner and transmitted.

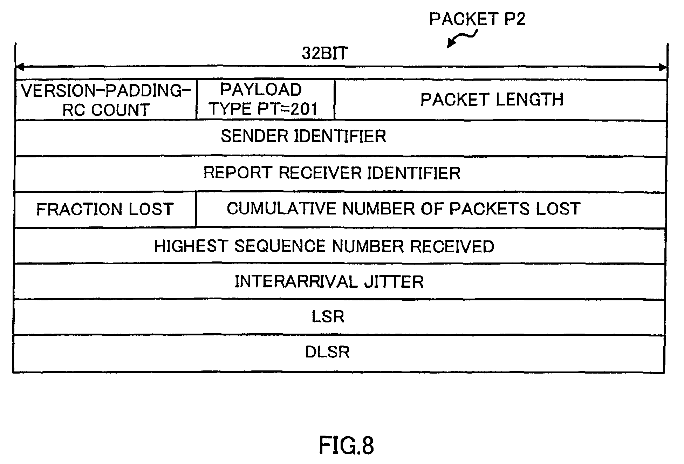

The time information receiving section 114 receives the receiver report packet P2 transmitted from the terminal apparatus 200 (refer to FIG. 5). In packet P2, the differential time DLSR, which is the time calculated from a point when the terminal apparatus 200 receives the packet P1 to a point when the packet P2 is transmitted, and server transmission time T1 transmitted by the server 100 are recorded. FIG. 8 shows an example of the packet P2.

The packet P2 shown in FIG. 8 includes the information of version-padding-RC count, payload type, packet length, sender identifier, report receiver identifier, fraction lost, cumulative number of packets lost, highest sequence number received, interarrival jitter, LSR and DLSR.

Here, as payload type, an identifier indicating the receiver report packet (PT=201) which is an indication of time information and packet loss information or the like transmitted periodically from the terminal apparatus 200 is given. In the packet length, packet length measured in 32-bit unit is recorded. In the sender identifier, a sequence of numbers capable of identifying uniquely the transmitter is recorded, and in the report receiver identifier, a sequence of numbers capable of identifying uniquely the report receiver of the receiver report packet is recorded. In the fraction lost, the ratio of lost packets to number of packets to be received after the previous receiver report packet has been transmitted is recorded, and in the cumulative number of packets lost, the total number of the lost packets after the session has begun is recorded.

Further, in the highest sequence number received, the SN value of the packet which has the maximum SN among the received packets is recorded. In the jitter, fluctuation of the receiving time of the RTP packet is recorded. In the LSR, the time when the most recent sender report was sent is recorded. In FIG. 5, the latest server transmitting time becomes LSR=T1. In the DLSR, the differential time between a point of time when the packet P1 has been received and a point of time when the relevant receiver report packet P2 is transmitted is recorded.

The second time measuring section 115 measures the time (server receiving time) T2 when the packet P2 is received by the time information receiving section 114 (refer to FIG. 5).

The round-trip time calculating section 116 obtains the round-trip time RTT by subtracting the differential time DLSR recorded in the packet P2 and the time T1 from the server receiving time T2. That is to say, the round-trip time RTT=T2-DLSR-T1.

Herein, the foregoing differential time DLSR is transmitted to the server 100 via the time information transmitting section 210 after being calculated in the terminal apparatus 200 by the time measuring section 207, time information transmission deciding section 208 and timer 209.

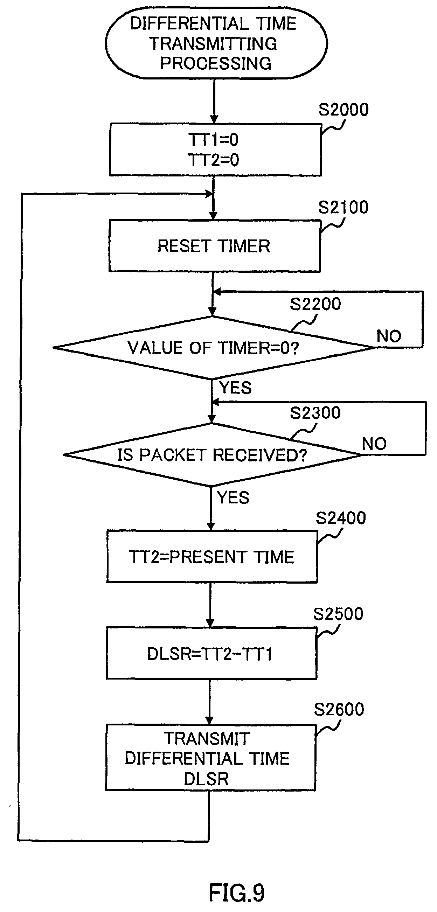

Now, referring to the flowchart shown in FIG. 9, a description will be made to the operation in which the differential time DLSR from the reception of packet P1 to the transmission of packet P2 is calculated and transmitted to the server 100 in the terminal apparatus 200.

First, in step S2000, the time parameter is initialized when starting communication. Specifically, the latest packet (transmission report packet P1) reception time TT1 and the latest packet (receiver report packet P2) transmission time TT2 are, respectively, reset to the initial value (=0).

Then, in step S2100, the timer 209 is initialized and the value of the timer is set to a predetermined initial value (positive integral number). When a specific time relative to the initial value has passed, the value (value of the timer) becomes "0", and the timer 209 outputs the transmission time of the differential time DLSR to the time information transmission deciding section 208 at regular intervals. For instance, "0" is output.

Then, in step S2200, the time information transmission deciding section 208 decides whether the value of the timer 209 (value of the timer) is "0". As a result of this decision, when the value of the timer is not "0" (S2200:NO), the relevant decision is continued, i.e., the operation waits, whereas the operation proceeds to step S2300 as the value of the timer is "0" (S2200:YES).

In step S2300, the time information transmission deciding section 208 decides whether the reception time TT1 of the packet P1 from the server 100 has been newly measured by the time measuring section 207, i.e., whether the packet P1 is newly received from the server 100. As a result of this decision, when the packet P1 has not been newly received from the server 100 (S2300:NO), the relevant decision is continued, i.e., the operation waits, whereas the operation proceeds to step S2400 as the packet P1 has been newly received from the server 100 (S2300:YES). Further, the time measuring section 207 measures the reception time TT1 of the packet P1 whenever the terminal apparatus 200 receives the packet P1 from the server 100, and is set (for example, overwritten) to the measured value.

In step S2400, the time information transmission deciding section 208 decides that the transmission of the receiver report packet P2 is OK, i.e., the receiver report packet P2 is to be transmitted, and the packet transmission time TT2 is set to the present time (for example, overwritten).

Then, in the step S2500, by the time measuring section 207, the difference between the packet transmission time TT2 (present time) and the packet reception time TT1 (latest time at which the packet P1 is received) is obtained, and the obtained difference is defined as the differential time DLSR (=TT2-TT1).

Finally, in step S2600, after the information of the differential time DLSR is transmitted to the server 100 by the time information transmitting section 210, the operation returns to step S2100.

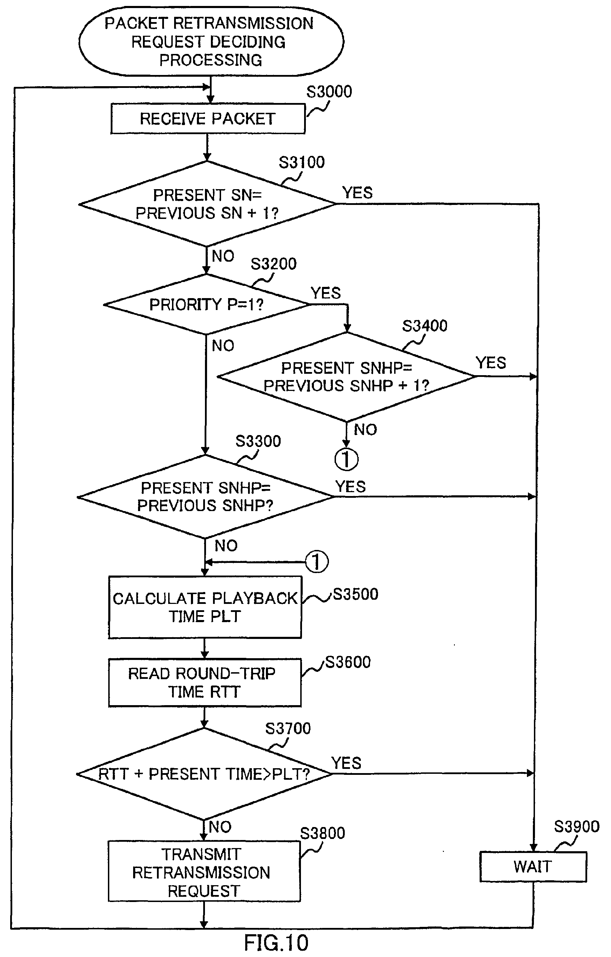

Now, referring to the flowchart shown in FIG. 10, a description will be made to the operation of the packet retransmission request decision using the round-trip time RTT.

First of all, in step S3000, the packet P1 from the server 100 is received by the receiving section 201.

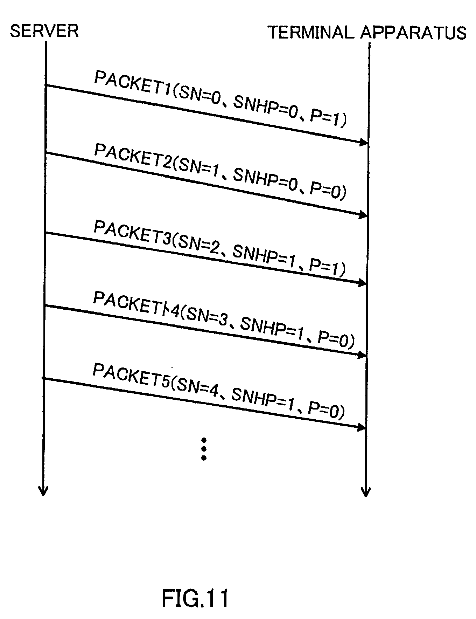

Herein, each packet P1 transmitted to the terminal apparatus 200 from the server 100, as shown in FIG. 11, is given, respectively, a sequence number SN, sequence number of high priority packet SNHP and priority P. That is to say, in the packets that the terminal apparatus 200 receives from the server 100, a packet which has high priority (high priority) (when p=1) and a packet which has low priority (low priority) (when p=0) are included, and when transmitting such packets P1, the server 100 increments the sequence number SN recorded in the header field by 1 whenever the packet P1 is transmitted. Further, particularly, when transmitting a high priority packet (P=1), the sequence number of the high priority packet SNHP (P=1) is also incremented by 1. For example, since the packet of SN=1 has low priority (P=0), SNHP=0, whereas the next packet of SN=2 has high priority (P=1), the SNHP is incremented by 1 resulted in SNHP=1.

In the next step S3100, the loss detecting section 202 decides whether the sequence number SN of the presently received packet (present SN) is incremented by 1 with respect to the sequence number SN of the previously received packet (previous SN). Responding to the decision result, when the present SN = previous SN+1(S3100:YES), it is decided that there is no lost packet among the previously received packet, then the operation proceeds to step S3900 and waits for reception. While, when the present SN = previous SN+1(S3100:NO) is not achieved, it is decided that there is a lost packet among the previously received packet, then the operation proceeds to step S3200, and a decision is made whether to carry out retransmission request of the lost packet.

In step S3200, the priority determining section 203 determines whether the priority of the received packet is high (P=1). As a result of the determination process, when the priority of the received packet is not high, i.e., when it is low priority (P=0) (S3200:NO), the operation proceeds to step S3300, whereas the operation proceeds to step S3400 when the priority of the received packet is high, i.e., when it is high priority (P=1) (S3200:YES).

In step S3300, since the received packet has low priority (P=0), the SN is incremented by 1 whereas SNHP is not incremented as long as there is no lost packet, and it is decided whether the sequence number of the high priority packet of the presently received packet (present SNHP) is equal to the sequence number of the high priority packet of the previously received packet (previous SNHP). According to decision result, when present SNHP = previous SNHP (S3300:YES), it is decided that there is no loss of high priority packet, then the operation proceeds to step S3900 and waits for reception. On the contrary, when present SNHP = previous SNHP (S3300:NO) is not achieved, it is decided that there is a loss of high priority packet, and the operation proceeds to step S3500.

While, in step S3400, since the received packet has high priority (P=1), both SN and SNHP are incremented by 1 as long as there is no loss, it is decided whether the sequence number of the high priority packet of the presently received packet (present SNHP) has been incremented by 1 with respect to the sequence number of the high priority packet of the previously received packet (previous SNHP). As a result of the decision, when present SNHP = previous SNHP + 1 (S3400:YES), it is decided that there is no loss of high priority packet, then the operation proceeds to step S3900 and waits for reception. On the contrary, when present SNHP = previous SNHP + 1 (S3400:NO) is not achieved, it is decided that there is a loss of high priority packet, then the operation proceeds to step S3500.

In step S3500, the playback time calculating section 204 calculates the playback time PLT (=TS-TSO) of the packet by calculating the difference between the timestamp TS of the presently received packet and the timestamp TSO at time when the session has begun to calculate a relative time assuming the time when the session has begun is "0".

In the following step S3600, the retransmission request deciding section 206 reads out the data round-trip time RTT from the server 100 received by the round-trip time receiving section 205 from the buffer in the round-trip time receiving section 205.

Next, in step S3700, the retransmission request deciding section 206 decides whether the playback time PLT calculated in step S3500 is less than the sum of the round-trip time RTT read out in step S3600 and the present time, i.e., whether playback time PLT < round-trip time RTT + present time.

When playback time PLT < round-trip time RTT + present time (step S3600:YES) as a result of the decision, it is determined that a wasteful retransmission request is not made even when the retransmission request is for the lost packet, since the playback time comes earlier than the time when the retransmission request is received, then the operation proceeds to step S3900 and waits for reception.

On the contrary, when the playback time PLT < round-trip time RTT + present time (step S3600:NO), the playback time comes later than the reception time of the repeat packet, and since it is possible to execute playback after receiving the repeat packet, the process proceeds to step S3800 and the retransmission request for the lost packet is transmitted to the server 100 by the retransmission request deciding section 206.

As described above, according to the data communication system of the first embodiment, it is possible to eliminate the transmission of wasteful data that is later than the playback time at the receiving side by executing the retransmission request of the lost packet having high priority only when the sum of the round-trip time RTT and the present time is less than the playback time of the packet after calculating the round-trip time RTT of the packet between the server 100 and the terminal apparatus 200, thus, the wasteful utilization of transmission band can be eliminated.

However, according to the first embodiment, although the retransmitting decision is carried out only when the lost packet is the high priority packet, it is not limited to this. It may be carried out the retransmitting decision for all lost packets regardless to the priority of packets.

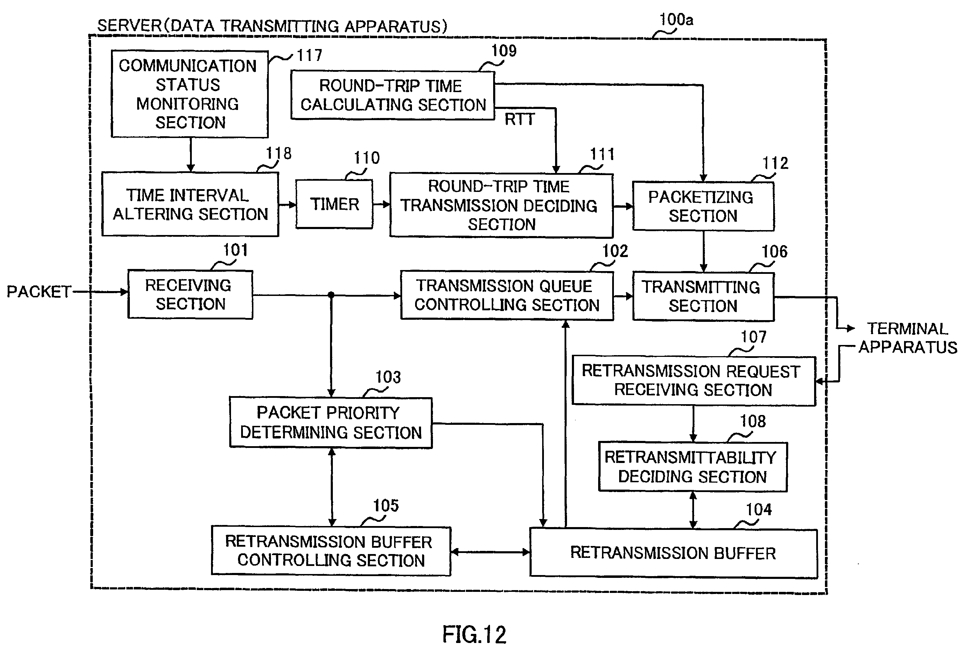

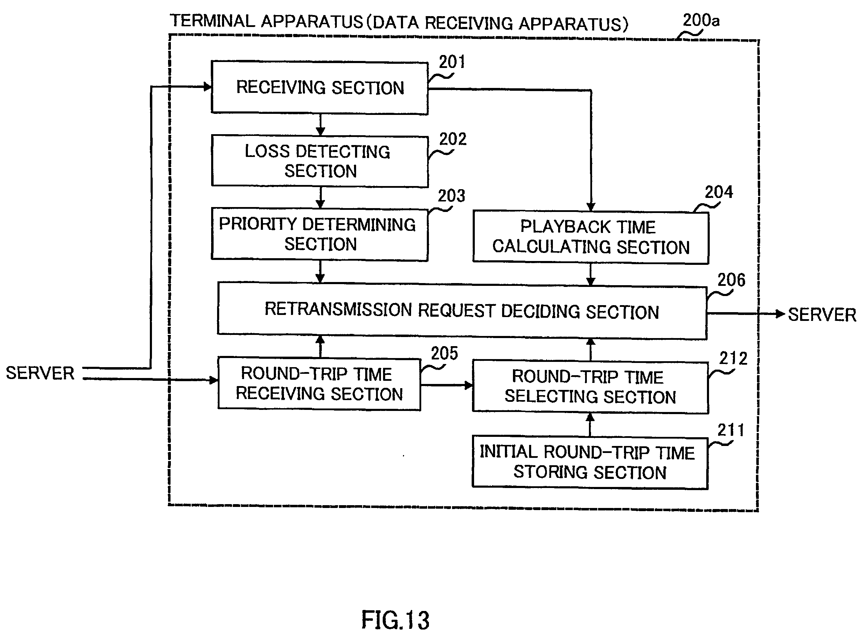

Furthermore, it is conceivable that the first embodiment includes several modifications thereof. FIG. 12 is a block diagram showing another constitution of the data transmitting apparatus (server), and FIG. 13 is a block diagram showing another constitution of the data receiving apparatus (terminal apparatus). Further, herein also, the description will be made while assuming a server and a terminal apparatus as an example of data transmitting apparatus and data receiving apparatus, respectively.

The characteristic (main feature) of the server 100a shown in FIG. 12 is that the server 100a includes a communication status monitoring section 117 and a time interval altering section 118. The communication status monitoring section 117 monitors the communication status of the packet, and the time interval altering section 118 alters the intervals in order to initialize the timer 110, i.e., the time for transmitting the round-trip time RTT, depending on the communication status which is inputted from the communication status monitoring section 117. For example, in case of bad communication status, the time intervals for transmitting the round-trip time RTT is shortened. Accordingly, even when the communication status is bad, the round-trip time RTT can be transmitted satisfactorily to the terminal apparatus 200.

Furthermore, as another constitution, although it is not shown among the figures, it may be adapted so that the time interval altering section 118 alters the time intervals for transmitting the round-trip time RTT to the terminal apparatus 200 in accordance with a difference between the present and previous round-trip times calculated in the round-trip time calculating section 109. For instance, when the difference between the calculated present and previous round-trip times is small, by elongating the time intervals for transmitting the round-trip time RTT, the utilization of transmission band can be reduced.

Still further, a characteristic of the terminal apparatus 200a shown in FIG. 13 is that, apparatus 200a includes instead of time measuring section 207, time information transmission deciding section 208, timer 209 and time information transmitting section 210 shown in FIG. 2, the terminal apparatus 200a includes an initial round-trip time storing section 211 and a round-trip time selecting section 212. The initial round-trip time storing section 211 stores a lower limit value and an upper limit value of the round-trip time RTT as an initial value. When the round-trip time RTT is received in the round-trip time receiving section 205, by testing whether the received round-trip time RTT is within the range between the lower and upper limit values stored in the initial round-trip time storing section 211, the round-trip time selecting section 212 selects only the round-trip time RTT that is within the aforementioned range and outputs it to the retransmission request deciding section 206. On account of this, the round-trip time RTT is maintained within a proper range even when it is not received correctly due to transmission route error, time measurement error, etc., therefore, the influence caused by an erroneous round-trip time RTT can be reduced.

Still furthermore, as another constitution, although it is not shown among the figures, a time interval altering section may be provided to the terminal apparatus 200 shown in FIG. 2, which alters the intervals of initializing the timer 209, i.e., alters the time intervals for transmitting the differential time DLSR to the server 100 in the time information transmitting section 210 in accordance with a difference between the present and previous round-trip times received by the round-trip time receiving section 205. Owing to this, for example, when a difference between the present and previous round-trip times is small, the utilization of transmission band can be reduced by elongating the transmission intervals used for transmitting the differential time DLSR.

### (Second Embodiment)

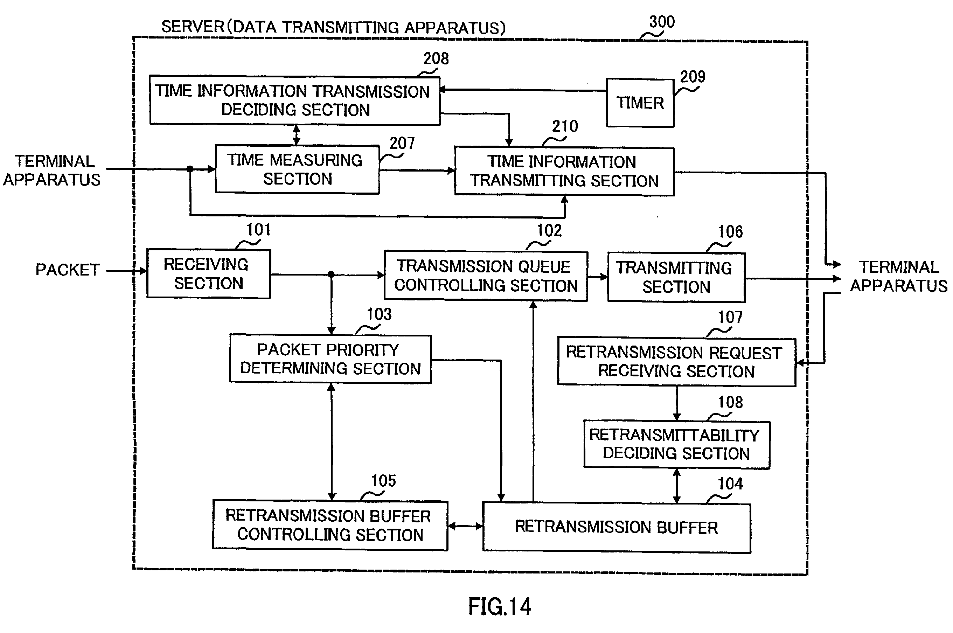

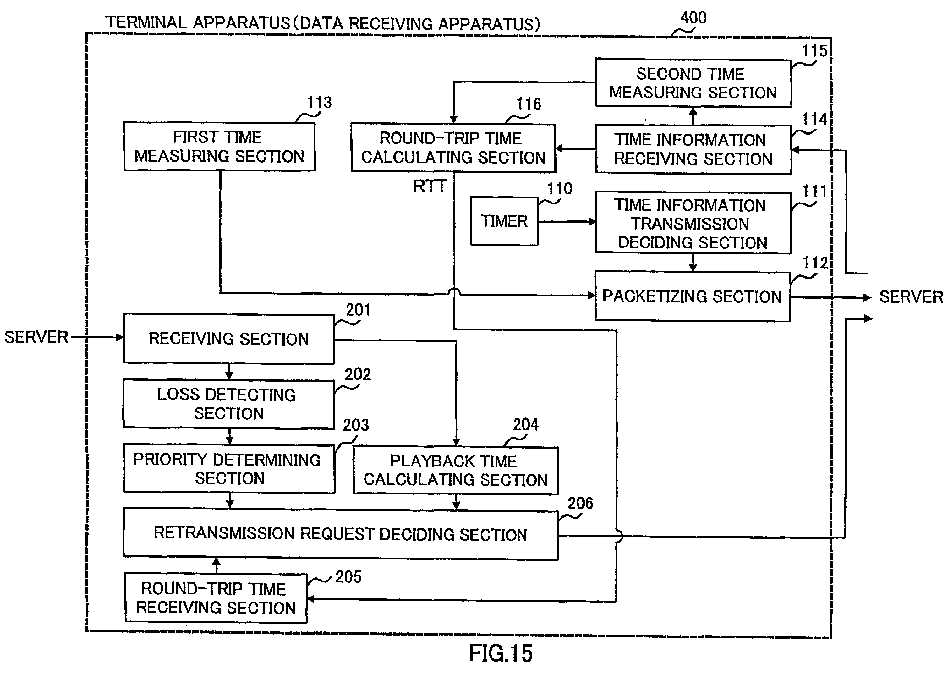

FIG. 14 is a block diagram showing a constitution of a data transmitting apparatus for a data communication system according to the second embodiment of the present invention, FIG. 15 is a block diagram showing a constitution of a data receiving apparatus for the same data communication system. Further, since the data transmitting apparatus and data receiving apparatus of the data communication system has the same basic constitution as those of the corresponding data transmitting apparatus and the data receiving apparatus according to the first embodiment shown in FIG. 1 and FIG. 2, the same component elements thereof are assigned the same reference numerals and descriptions thereof are omitted. Furthermore, in the second embodiment also, description will be made while taking, respectively, a server and terminal as an example of the data transmitting apparatus and data receiving apparatus.

The server 300 shown in FIG. 14 includes, in addition to the receiving section 101, transmission queue controlling section 102, packet priority determining section 103, retransmission buffer 104, retransmission buffer controlling section 105, transmitting section 106, retransmission request receiving section 107 and retransmitability deciding section 108 shown in FIG. 1, and instead of the round-trip time calculating section 109, timer 110, round-trip time transmission deciding section 111 and packetizing section 112 shown in FIG. 1, includes a time measuring section 207, time information transmission deciding section 208, timer 209 and time information transmitting section 210 shown in FIG. 2.

Moreover, the terminal apparatus 400 shown in FIG. 15 includes, in addition to the receiving section 201, loss detecting section 202, priority determining section 203, playback time calculating section 204, round-trip time receiving section 205 and retransmission request deciding section 206 shown in FIG. 2, and instead of the time measuring section 207, time information transmission deciding section 208, timer 209 and time information transmitting section 210 shown in FIG. 2, the first time measuring section 113, time information receiving section 114, second time measuring section 115 and round-trip time calculating section 116 shown in FIG. 4, and the timer 110, round-trip time transmission deciding section 111 and packetizing section 112 shown in FIG. 1.

That is to say, the second embodiment adopts a constitution in which the round-trip time RTT is calculated by the terminal apparatus 200.

Next, an operational description of the data communication system having the foregoing constitution is given below.

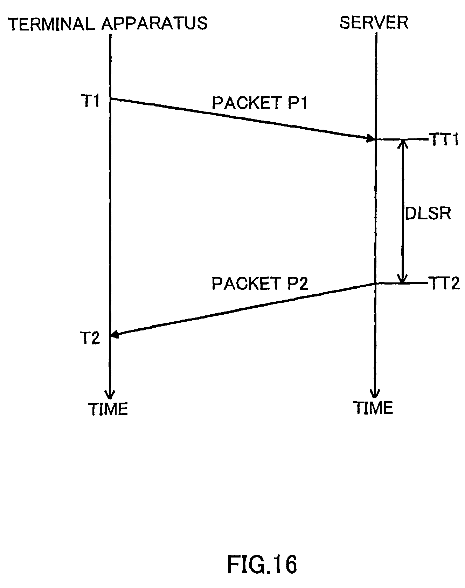

First, when calculating the round-trip time RTT, the terminal apparatus 400 measures the time T1 (terminal apparatus transmission time) when the packet P1 is transmitted from the relevant terminal apparatus 400 (referring to FIG. 16) in the first time measuring section 113.

Then, the packet P2 transmitted from the server 300 is received by the time information receiving section 114. In the packet P2, both the differential time DLSR measured from the time when the server 300 has received the packet P1 to the time when the packet P2 is transmitted to the terminal apparatus 400 and terminal apparatus transmission time T1 transmitted by the terminal apparatus 400 are recorded.

Next, in the second time measuring section 115, the time T2 (terminal apparatus reception time) when the packet P2 is received by the time information receiving section 114 is measured (referring to FIG. 16).

After that, the round-trip time calculating section 116 calculates the round-trip time by subtracting the differential time DLSR recorded in the packet P2 and the terminal apparatus transmission time T1 from the terminal apparatus reception time T2, the round-trip time RTT (=T2-DLSR-T1) and the obtained result is outputted to the round-trip time receiving section 205.

On the other hand, whenever the timer 209 is reset after a specific time has passed, i.e., at regular intervals, the server 300 outputs the transmission time of the differential time DLSR to the time information transmission deciding section 208.

The time information transmission deciding section 208 decides whether the packet P1 from the terminal apparatus 400 has been newly received by the time measuring section 207 at every transmission time transmitted from the timer 209, and when the packet P1 has been received, the packet transmission time TT2 is set as the present time.

Then, the time measuring section 207 obtains the difference between the packet transmission time TT2 (present time) and the packet reception time TT1 (the latest time when the packet P1 is received) and the obtained difference is defined as the differential time DLSR (=TT2-TT1).

Next, the time information transmitting section 210 transmits the differential time DLSR to the terminal apparatus 400.

Since the other operations thereof are the same as that of the data communication system corresponding to the first embodiment, the description thereof is omitted.

As described above and according to the data communication system of the second embodiment, it is possible to eliminate the transmission of wasteful data that is later than the playback time at the receiving side by executing the retransmission request of the lost packet having the high priority only when the sum of the round-trip time RTT and the present time is less than the playback time of the packet after calculating the round-trip time RTT of the packet between the server 300 and the terminal apparatus 400, thus the wasteful utilization of transmission band can be eliminated.

Further, in the second embodiment, although the retransmission decision is carried out only when the lost packet is of high priority, it is not limited to this, but also it may be carried out on every lost packet regardless to the priority of the packet.

Furthermore, in the respective foregoing embodiments, the data communication system is composed of data transmitting apparatus (server) 100 or 300 and data receiving apparatus (terminal apparatus) 200 or 400, the data communication system is not limited to this. For example, a composition in which a relay apparatus is provided between the data transmitting apparatus and data receiving apparatus may be adopted.

The description of the invention is based on both, the Japanese Patent Application No. 2000-207296 filed on July 7, 2000 and the Japanese Patent Application No. 2001-199621 filed on June 29, 2000. Entire content of the above is expressly incorporated by reference herein.

### Industrial Applicability

The present invention is applicable to a data transmitting apparatus and a data receiving apparatus in a data communication system.

## Claims

1. A data transmitting apparatus, comprising:
storing means for storing a retransmittable data only;
retransmitting means for retransmitting a data that is extracted from the data stored in said storing means corresponding to a retransmission request of a receiving side;
calculating means for calculating a data round-trip time between the receiving side and the data transmitting apparatus; and
transmitting means for transmitting the data round-trip time calculated by said calculating means to the receiving side at a predetermined time interval.

2. The data transmitting apparatus according to claim 1, wherein the retransmittable data is a data that has high priority.

3. The data transmitting apparatus according to claim 1, wherein said calculating means comprises:
means for measuring transmission time of a first data to be transmitted to the receiving side;
means for measuring reception time of a second data transmitted from the receiving side in response to the first data; and
means for calculating the data round-trip time by subtracting a differential time between reception time of the first data at the receiving side and transmission time of the second data, the differential time being included in the second data, and the measured first data transmission time from the measured second data reception time.

4. The data transmitting apparatus according to claim 3, wherein said calculating means calculates, when the measured first data transmission time is transmitted to the receiving side and the first data transmission time is included in the second data together with the differential time, the data round-trip time using the first data transmission time included in the second data.

5. The data transmitting apparatus according to claim 1, further comprising packetizing means for packetizing the data round-trip time calculated by said calculating means together with other information to form a single packet, and wherein said transmitting means transmits the single packet formed by said packetizing means to the receiving side at a predetermined time interval.

6. The data transmitting apparatus according to claim 1, further comprising:
monitoring means for monitoring the status of data communication; and
altering means for altering the time interval at which the data round-trip time calculated by said calculating means is transmitted to the receiving side in accordance with the result of the monitoring by said monitoring means.

7. The data transmitting apparatus according to claim 1, further comprising altering means that includes means for holding the data round-trip time calculated by said calculating means and for altering the time interval at which a present data round-trip time calculated by said calculating means is transmitted to the receiving side in accordance with a time difference between the present data round-trip time and a previous data round-trip time calculated by said calculating means.

8. A data transmitting apparatus, comprising:
storing means for storing a retransmittable data only;
retransmitting means for retransmitting a data that is extracted from the data stored in said storing means corresponding to a retransmission request of a receiving side;
measuring means for measuring a differential time between reception time of a first data transmitted from the receiving side and transmission time of a second data to be transmitted to the receiving side in response to the first data; and
transmitting means for transmitting the differential time measured by said measuring means included in the second data to the receiving side at a predetermined time interval.

9. A data receiving apparatus, comprising:
receiving means for receiving a data;
loss detecting means for detecting loss of data when the data is received by said receiving means;
playback time calculating means for calculating playback time of the data received by said receiving means;
round-trip time receiving means for receiving a data round-trip time between a transmitting side and the data receiving apparatus; and
retransmission request deciding means for deciding, when a lost data is detected by said loss detecting means, whether a retransmission request for the lost data is made or not based on the playback time calculated by said playback time calculating means and the data round-trip time received by said data round-trip time receiving means.

10. The data receiving apparatus according to claim 9, further comprising priority determining means for determining, when a lost data is detected by said loss detecting means, the priority of the lost data, and wherein said retransmission request deciding means decides whether the retransmission request is made or not for the lost data which is determined by said priority determining means that the priority thereof is not less than a predetermined value.

11. The data receiving apparatus according to claim 9, further comprising:
measuring means for measuring a differential time between reception time of a first data transmitted from a transmitting side and transmission time of a second data to be transmitted to the transmitting side in response to the first data; and
transmitting means for transmitting the differential time measured by said measuring means included in the second data to the transmitting side at a predetermined time interval.

12. The data receiving apparatus according to claim 9, further comprising transmission time receiving means for receiving transmission time of the first data transmitted from the transmitting side, and wherein said transmitting means transmits the transmission time received by said transmission time receiving means together with the differential time measured by said measuring means to the transmitting side at the predetermined time interval.

13. The data receiving apparatus according to claim 9, further comprising:
storing means for storing a lower limit value and an upper limit value of the data round-trip time; and
selecting means for selecting only a data round-trip time that is within a range between the lower limit value and the upper limit value stored in said storing means from the data round-trip time received by said data round-trip time receiving means, and
wherein said retransmission request deciding means decides, when a lost data is detected by said loss detecting means, whether the retransmission request for the lost data is made or not based on the playback time calculated by said playback time calculating means and the data round-trip time selected by said selecting means.

14. The data receiving apparatus according to claim 11, further comprising altering means that includes means for holding the data round-trip time received by said data round-trip time receiving means and for altering the time interval at which the differential time measured by said measuring means is transmitted to the transmitting side in accordance with a time difference between a present data round-trip time and a previous data round-trip time that are received by said round-trip time receiving means.

15. A data receiving apparatus, comprising:
calculating means for calculating a data round-trip time between a transmitting side and the data receiving apparatus by subtracting transmission time of a first data transmitted to the transmitting side and a differential time between reception time of the first data at the transmitting side and transmission time of a second data transmitted from the transmitting side, the differential time being included in the second data, from reception time of the second data;
receiving means for receiving a data;
loss detecting means for detecting loss of data when the data is received by said receiving means;
playback time calculating means for calculating playback time of the data received by said receiving means; and
retransmission request deciding means for deciding, when a lost data is detected by said loss detecting means, whether a retransmission request for the lost data is made or not based on the playback time calculated by said playback time calculating means and the data round-trip time calculated by said calculating means.

16. Abase station apparatus including the data transmitting apparatus in any one of claims 1 through 8.

17. An information communication terminal apparatus including the data receiving apparatus in any one of claims 9 through 15.

18. A mobile station apparatus including the data receiving apparatus in any one of claims 9 through 15.

19. A data communication system comprising a data transmitting apparatus and a data receiving apparatus,
wherein the data transmitting apparatus comprises:
storing means for storing a retransmittable data only;
retransmitting means for retransmitting a data that is extracted from the data stored in said storing means corresponding to a retransmission request of the data receiving apparatus;
calculating means for calculating a data round-trip time between the data receiving apparatus and the data transmitting apparatus; and
transmitting means for transmitting the data round-trip time calculated by said calculating means to the data receiving apparatus at a predetermined time interval, and
wherein the data receiving apparatus comprises:
receiving means for receiving the data transmitted from the data transmitting apparatus;
loss detecting means for detecting loss of data when the data is received by said receiving means;
playback time calculating means for calculating playback time of the data received by said receiving means;
round-trip time receiving means for receiving the data round-trip time transmitted from said transmitting means; and
retransmission request deciding means for deciding, when a lost data is detected by said loss detecting means, whether a retransmission request for the lost data is made or not based on the playback time calculated by said playback time calculating means and the data round-trip time received by said round-trip time receiving means.

20. A data communication system comprising a data transmitting apparatus and a data receiving apparatus,
wherein the data transmitting apparatus comprises:
storing means for storing a retransmittable data only;
retransmitting means for retransmitting a data that is extracted from the data stored in said storing means corresponding to a retransmission request of the data receiving apparatus;
measuring means for measuring a differential time between reception time of a first data transmitted from the data receiving apparatus and transmission time of a second data to be transmitted to the data receiving apparatus in response to the first data; and
transmitting means for transmitting the differential time measured by said measuring means included in the second data to the data receiving apparatus at a predetermined time interval, and
wherein the data receiving apparatus comprises:
calculating means for calculating a data round-trip time between the data transmitting apparatus and the data receiving apparatus by subtracting transmission time of the first data transmitted to the data transmitting apparatus and the differential time included in the second data transmitted from the data transmitting apparatus from reception time of the second data;
receiving means for receiving the data transmitted from the data transmitting apparatus;
loss detecting means for detecting loss of data when the data is received by said receiving means;
playback time calculating means for calculating playback time of the data received by said receiving means; and
retransmission request deciding means for deciding, when a lost data is detected by said loss detecting means, whether a retransmission request for the lost data is made or not based on the playback time calculated by said playback time calculating means and the data round-trip time calculated by said calculating means.

21. The data communication system according to claim 19 or 20, further comprising priority determining means for determining, when a lost data is detected by said loss detecting means, the priority of the lost data, and wherein said retransmission request deciding means decides whether the retransmission request is made or not for the lost data which is determined by said priority determining means that the priority thereof is not less than a predetermined value.

22. A data communication method in a data communication system comprising a data receiving apparatus and a data transmitting apparatus that retransmits a data which is extracted from the data stored in storing means for storing a retransmittable data only corresponding to a retransmission request of the data receiving apparatus, said method comprising:
a calculating step in which the data transmitting apparatus calculates a data round-trip time between the data receiving apparatus and the data transmitting apparatus;
a transmitting step in which the data transmitting apparatus transmits the data round-trip time calculated in the calculating step to the data receiving apparatus at a predetermined time interval;
a receiving step in which the data receiving apparatus receives the data transmitted from the data transmitting apparatus;
a loss detecting step in which the data receiving apparatus detects loss of data when the data is received in the receiving step;
a playback time calculating step in which the data receiving apparatus calculates playback time of the data received in the receiving step;
a round-trip time receiving step in which the data receiving apparatus receives the data round-trip time transmitted in the transmitting step; and
a retransmission request deciding step in which the data receiving apparatus decides, when a lost data is detected in the loss detecting step, whether a retransmission request for the lost data is made or not based on the playback time calculated in the playback time calculating step and the data round-trip time received in the round-trip time receiving step.

23. A data communication method in a data communication system comprising a data receiving apparatus and a data transmitting apparatus that retransmits a data which is extracted from the data stored in storing means for storing a retransmittable data only corresponding to a retransmission request of the data receiving apparatus, said method comprising:
a measuring step in which the data transmitting apparatus measures a differential time between reception time of a first data transmitted from the data receiving apparatus and transmission time of a second data to be transmitted to the data receiving apparatus in response to the first data;
a transmitting step in which the data transmitting apparatus transmits the differential time measured in the measuring step included in the second data to the data receiving apparatus at a predetermined time interval;
a calculating step in which the data receiving apparatus calculates a data round-trip time between the data transmitting apparatus and the data receiving apparatus by subtracting transmission time of the first data transmitted to the data transmitting apparatus and the differential time included in the second data transmitted from the data transmitting apparatus from reception time of the second data;
a receiving step in which the data receiving apparatus receives the data transmitted from the data transmitting apparatus;
a loss detecting step in which the data receiving apparatus detects loss of data when the data is received in the receiving step;
a playback time calculating step in which the data receiving apparatus calculates playback time of the data received in the receiving step; and
a retransmission request deciding step in which the data receiving apparatus decides, when a lost data is detected in the loss detecting step, whether a retransmission request for the lost data is made or not based on the playback time calculated in the playback time calculating step and the data round-trip time calculated in the calculating step.

24. The data communication method in the data communication system according to claim 22 or 23, further comprising a priority determining step in which the data receiving apparatus determines, when a lost data is detected in the loss detecting step, the priority of the lost data, and wherein in the retransmission request deciding step it is decided whether the retransmission request is made or not for the lost data which is determined in the priority determining step that the priority thereof is not less than a predetermined value.
